# EUROPEAN PATENT APPLICATION

(11) **EP 3 081 709 A1**
(43) Date of publication of application: **19.10.2016**
(21) Application number: 16165867.9
(22) Date of filing: 18.04.2016
(51) Int. Cl.: E04B 1/41, F16B 13/12

(54) **HAMMER-IN WALL-TIE SYSTEM**

(30) Priority: 17.04.2015 GB 201506584
(71) Applicant: Magmatech Ltd, London NW1 8HX (GB)
(72) Inventor: Williams, Benjamin, London, NW1 8HX (GB)
(74) Representative: Ellis, Michael James

(57) **Abstract**

In an improved wall-tie and cooperating anchor plug system, the wall-tie has an elongate rod having a plug cooperating portion, a tapered tip portion and a body portion with surface features and an anchor plug for fitting into a hole in a wall is elongate element with an opening at its proximal end for receiving a wall tie and having one or more of a flanged portion at the proximal end, a closed distal end, surface features provided on the outer surface, a tapered internal body portion comprising a tapered internal surface along at least a portion of the longitudinal extent of the plug cavity, a proximal portion extending from the proximal end along at least a portion of the length of the plug having a constant diameter inner surface and an inwardly tapering outer surface and a distal end having outer and inner surfaces that taper inwardly toward the distal end. This wall-tie system is suitable for use in a cavity wall or between two skins in which one wall requires hammer-in ties and is formed of formed of concrete, cement, calcium silicate, lime or other such material, whilst being resistant to a load of at least 1 kN in both compression and tension and allows for the ties to be of low thermal conductivity material.

## Description

### FIELD OF THE INVENTION

This invention pertains generally to the field of structural wall ties and systems therefor for tying two or more structural skins, e.g. in the construction industry. More particularly, the invention relates to a wall tie, components for a wall tie and methods of manufacturing and installing a wall tie.

### BACKGROUND OF THE INVENTION

Wall-ties are frequently used in tying structural skins. In certain surfaces, such as concrete, cement, calcium silicate, lime and other such materials, one option is to use a wall-tie with cooperating plug which may be hammered in to a drilled hole in the skin or wall sized to receive the plug and tie system.

It is desirable to provide wall ties with low thermal conductivity to reduce thermal bridging across cavity walls and between structural skins which is a significant contributor to poor thermal performance of buildings.

A problem that commonly arises with known wall ties for hammering in is inconsistent depth of installed tie, poor or insufficient performance in compression, poor or insufficient performance in tension

The present inventor has sought to develop a wall tie arrangement comprising a wall tie and cooperating fixing plug that addresses the aforementioned shortcomings of existing hammer-in wall ties.

### PROBLEM TO BE SOLVED BY THE INVENTION

There is a need for improvements in wall ties and in particular hammer in wall ties for cavity walls and structural skins.

It is an object of this invention to provide a hammer in wall-tie system that demonstrates good thermal transfer performance, is relatively low-cost to manufacture and demonstrates good strength in compression and tension in a variety of materials.

### SUMMARY OF THE INVENTION

In accordance with a first aspect of the invention, there is provided a wall-tie and cooperating anchor plug system comprising: a wall-tie configured for fitting to a cooperating anchor plug, the wall-tie comprising an elongate rod having a plug cooperating portion, the wall-tie having a tapered tip portion and a body portion, which body portion is provided with surface features; and an anchor plug for fitting into a hole in a wall or skin, the plug comprising an elongate element having an outer surface and an inner surface defining a cavity for receiving the wall tie, which cavity has an opening at a proximal end through which a cooperating wall tie may pass into the cavity, a longitudinal extent and having an opposing distal end, the plug being further defined by one or more of the following features:
a) a flanged portion at the proximal end
b) a closed distal end
c) surface features provided on the outer surface
d) a tapered internal body portion comprising a tapered internal surface along at least a portion of the longitudinal extent of the plug cavity;
e) a proximal portion extending from the proximal end along at least a portion of the length of the plug having a constant diameter inner surface and an inwardly tapering outer surface
f) a distal end having outer and inner surfaces that taper inwardly toward the distal end; and, optionally
g) a distal portion extending from the distal end of feature f) above along at least a portion of the length of the plug having a constant diameter inner surface.

In a second aspect of the invention, there is provided a wall-tie for use in a system as defined above, the wall tie comprising an elongate rod having a plug cooperating portion, the wall-tie plug cooperating portion having a tapered tip portion and a body portion, which body portion is provided with surface features.

In a third aspect of the invention, there is provided an anchor plug for use in a system as defined above, the anchor plug configured for fitting into a hole in a wall or skin, the anchor plug comprising an elongate element having an outer surface and an inner surface defining a cavity for receiving the wall tie, which cavity has an opening at a proximal end through which a cooperating wall tie may pass into the cavity, a longitudinal extent and having an opposing distal end, the plug being further defined by one or more of the following features:
a) a flanged portion at the proximal end
b) a closed distal end
c) surface features provided on the outer surface
d) a tapered internal body portion comprising a tapered internal surface along at least a portion of the longitudinal extent of the plug cavity;
e) a proximal portion extending from the proximal end along at least a portion of the length of the plug having a constant diameter inner surface and an inwardly tapering outer surface
f) a distal end having outer and inner surfaces that taper inwardly toward the distal end; and, optionally
g) a distal portion extending from the distal end of feature f) above along at least a portion of the length of the plug having a constant diameter inner surface.

In a fourth aspect of the invention, there is provided a method for the manufacture of a hammer-in tie as defined above, the method comprising moulding or forming by extrusion or pultrusion by providing a fibre material and resin material and forming thereby the tie.

In a fifth aspect of the invention, there is provided a method for the manufacture of an anchor plug as defined above, the method comprising, providing a mould shaped to form the plug, disposing in the mould a polymer-forming monomer, closing the mould and causing the polymer-forming monomer to be cured thereby forming a polymer article shaped to the mould and releasing the mould to remove the anchor plug.

In a sixth aspect of the invention, there is provided a method for installing a wall tie system as defined above, the method comprising drilling a hole in a first wall or skin, fitting into the hole a plug as defined above and hammering into the plug a wall-tie as defined above.

### ADVANTAGES OF THE INVENTION

The wall-tie system of the present invention enables low thermal conductivity ties to be provided to a cavity wall or between two skins, one wall or skin requiring hammer-in ties and formed of concrete, cement, calcium silicate, lime or other such material, whilst being resistant to a pre-defined load, preferably of at least 1 kN, in both compression and tension.

### BRIEF DESCRIPTION OF THE DRAWINGS

Figures 1 is a diagrammatic representation of a hammer-in wall-tie and plug system of one embodiment the present invention;
Figure 2 is a side view of a first end portion of a wall-tie shown in Figure 1;
Figures 3a and 3b illustrate respective perspective views of a plug shown in Figure 1;
Figure 4 is a side view of a plug of one embodiment of the present invention; and
Figure 5 is a cross-sectional view of the plug of Figure 4.

### DETAILED DESCRIPTION OF THE INVENTION

The invention provides for an improved hammer-in wall-tie and cooperating plug system and for an improved hammer-in wall-tie and an improved plug or receiving plug for use with a hammer-in wall-tie. Preferably, in a system of the invention, the anchor plug is configured or selected to closely match the wall-tie dimensions and the wall-tie is configured and provided with surface features to enable consistent embedment and good load resistance under tension and compression.

The wall-tie is preferably configured for fitting to a cooperating anchor plug. The wall-tie comprising an elongate rod having a plug cooperating portion, a tapered tip portion and a body portion, which body portion is provided with surface features.

The anchor plug, which should be capable of fitting into a drilled hole in a wall or skin, comprises an elongate element having an outer surface and an inner surface defining a cavity for receiving the wall tie, which cavity has an opening at a proximal end through which a cooperating wall tie may pass into the cavity, a longitudinal extent and having an opposing distal end. Preferably, the plug is further defined by one or more of the following features:
a) a flanged portion at the proximal end
b) a closed distal end
c) surface features provided on the outer surface
d) a tapered internal body portion comprising a tapered internal surface along at least a portion of the longitudinal extent of the plug cavity;
e) a proximal portion extending from the proximal end along at least a portion of the length of the plug having a constant diameter inner surface and an inwardly tapering outer surface
f) a distal end having outer and inner surfaces that taper inwardly toward the distal end; and, optionally
g) a distal portion extending from the distal end of feature f) above along at least a portion of the length of the plug having a constant diameter inner surface.

Preferably, the plug comprises a tapered internal body portion comprising a tapered internal surface along at least a portion of the longitudinal extent of the plug cavity. The tapered internal surface is preferably a shallow taper along a significant portion of the plug cavity, e.g. at least 30 percent, more preferably at least 50%, more preferably at least 60%, still more preferably at least 70% and optionally 75% or more.

Preferably, the tapered internal body portion has a taper represented by a gradient in the range from 1 in 25 to 1 in 500, preferably from 1 in 30 to 1 in 200 (or 1 in 150) and most preferably from 1 in 50 to 1 in 125.

Preferably, the tapered internal body portion extends to a length of from 25 to 70 mm (e.g. up to 60 mm), preferably 45 to 55 mm (e.g. 50 mm).

Preferably, the tapered internal body portion has a taper that reduces the diameter of the cavity by an amount in the range from 0.25 mm to 2 mm, preferably up to 1.5 mm, optionally up to 1 mm and preferably at least 0.5 mm. For example, the internal body portion may be tapered so as reduce the diameter by between 0.25 and 0.75 or between 0.75 and 1.25 or between 1.25 and 1.75 mm.

Preferably the internal cavity defines a generally circular profile.

Preferably, the internal cavity has a longitudinal extent of up to 100 mm (e.g. up to 90 mm) and at least 50 mm and more preferably 65 to 80 and still more preferably 65 to 75 mm and most preferably about 70 mm.

Preferably, the plug comprises a flanged portion at the proximal end. Preferably, the flanged portion comprises a laterally extending collar about the rim of the opening, providing a flanged collar. The flanged collar preferably has a depth of up to 5 mm, e.g. at least 2 mm and most typically 2 to 3 mm (e.g. 2.5 mm) to give it sufficient rigidity) and preferably a lateral extent of at least 1.5 mm and more preferably at least 2 mm (and typically from 1.5 to 3.5 mm).

Preferably, the plug comprises a proximal portion extending from the proximal end along at least a portion of the length of the plug having a constant diameter inner surface and/or an inwardly tapering outer surface. Preferably, the proximal portion extends for 5 to 20 mm, more preferably 8 to 15 mm (e.g. from 9-11 mm).

Preferably, the inwardly tapering outer surface has a taper angle of from 10 to 20 degrees, preferably about 15 degrees.

Preferably, the plug comprises surface features on the outer surface thereof. Optionally, the surface features are notches in the outer surface of the plug and/or teeth protruding from the outer surface of the plug. These are preferably of 1 to 2 mm radius notches and disposed about the surface of the plug and preferably every 5 to 10 mm along its length. Teeth preferably are about 0.5 to 1.5 mm (e.g. about 1 mm) in protruding extent and preferably are disposed every 0.25 to 1 mm along the length of the plug.

Preferably, the distal end of the plug comprises a closed end.

Preferably, a distal end of the plug has outer and inner surfaces that taper inwardly toward the distal end. Optionally, the plug has a distal portion extending from the distal end along at least a portion of the length of the plug having a constant diameter inner surface.

The internal diameter of the opening is preferably in the range 3-7 mm and, for example 4 mm, 5 mm, 6 mm or 7 mm (or up to 0.5 mm, more preferably up to 0.3 mm greater) for receiving a correspondingly nominal diameter of wall-tie of 4 mm, 5 mm, 6 mm or 7 mm, provided with surface feature of up to 0.25 mm in extent.

The plug may be formed of any suitable material, typically a mouldable polymer material, but is preferably formed from polyamide or polypropylene.

The wall-tie of the invention preferably comprises a body portion of generally cylindrical section, excluding the surface features thereon. Preferably, the body portion of the wall-tie, excluding the surface features thereon, is from 4 to 8 mm in diameter, preferably 4, 5, 6 or 7 mm.

Preferably, the wall-tie comprises surface features comprising protrusions, undulations or surface irregularities extending from the body portion of the wall-tie. Preferably there are no cuttings into the core of the body portion, but simply protrusions. Preferably, the surface features are ribs or threads formed on the body portion of the wall-tie. Optionally, the surface features are provided by a helical thread formed on the body portion of the wall-tie. A thread is preferably provided by a length of a fibre thread (e.g. cotton) set in a resin (e.g. epoxy resin) on the surface of the body portion.

Preferably, the surface features extend outwardly from the body portion of the wall-tie by up to 0.25 mm (or up to 0.1 mm).

Preferably, the wall-tie further comprises an opposing end portion adapted for fixing to a second skin. For example, the opposing end may comprise a length of elongate rod with a coating of sand thereon.

Preferably, the body portion and tip portion of the wall tie are absent a coating of sand.

Preferably, the wall-tie is formed from a low thermal conductivity material.

Preferably, the wall-tie is formed from a fibre-reinforced polymer.

The end portion is preferably tapered. Preferably the end portion is tapered at an angle of up to 45 degrees, preferably from 5 to 30 degrees, more preferably from 10 to 20 degrees, still more preferably from 12 to 18 degrees and most preferably about 15 degrees. Preferably, the tapered end portion extends for up to 20 mm, preferably up to 10 mm and preferably has no surface irregularities or undulations.

The wall-tie preferably comprises an opposing end portion configured to affixing to a second skin or wall. In one embodiment, the opposing end portion is configured for affixing to a brick course skin. In this embodiment the opposing end portion preferably comprises a portion of elongate rod, without surface irregularities or undulations but optionally with surface modification to increase resistance to load under compression and or tension within a mortar, for example a coating of sand.

Preferably the body portion comprises a portion of the elongate rod between the end portion and the opposing end portion and preferably this body portion is of generally constant diameter and provided with surface irregularities such as undulations, protrusions or a ribbed or threaded surface.

The wall-tie may be formed of a fibre-reinforce polymer (FRP). Preferably, the wall- a fibre-reinforced polymer (FRP). The FRP is preferably formed of a fibre dispersed in a cured polymer resin. Any suitable fibre or fibres may be used in the manufacture of the fibre-reinforced polymer. Examples of fibres that may be used in the FRP or polymer-based material in accordance with the present invention may be synthetic and/or natural fibres and may include any one or a combination of: glass fibres; carbon fibres; boron fibres; Kevlar™ fibres; mineral fibres; basalt fibre; metal strands such as aluminium, copper or steel; polymer fibres such as polyester, polyethylene or aramids; or natural fibres such as cotton, jute, hemp or flax. Preferably the fibres are selected from fibres having low thermal conductivity. Thus, preferably, the fibres are selected from glass fibres, polymer fibres and basalt fibres, more preferably glass fibres and basalt fibres and most preferably basalt fibres.

Optionally, more than one fibre material can be used in combination in the fibre-reinforced polymer in forming the wall-tie of the invention. Such constitution of combinations of fibre materials may vary longitudinally along the length of the wall-tie, for example, or radially from core to surface, or the combination may comprise a random distribution of constituent fibres. Suitable such combinations of fibre materials might be, for example, any two or more of glass fibres, polymer fibres, carbon fibres and basalt fibres in combination, such as glass and basalt fibres or basalt and carbon fibres in combination.

Particularly suitable fiber-reinforced polymers for the wall-tie of the invention include glass fiber-reinforced polymers or basalt fiber-reinforced polymer.

The fibres may be orientated in any suitable arrangement, e.g. random, partially aligned or aligned. Preferably, at least a portion (e.g. a core) of the body portion of the wall-tie of the invention is formed of fibre-reinforced polymer having partially aligned and preferably aligned fibres. Preferably, the body portion comprises a core fibre-reinforced polymer material having longitudinally aligned fibres, typically of basalt fibre, being fibres aligned longitudinally with the body portion of the wall tie.

The body portion may be formed of a core of fibre-reinforced polymer, preferably basalt fibre and preferably longitudinally aligned fibres. Optionally, the body portion may comprise more than one layer of fibre reinforced polymer material. For example, the body portion may comprise of a longitindal core of fibre-reinforced polymer and one or more layers of fibre-reinforced polymer formed thereon. Longitudinal alignment of fibres enables the body portion to have the tensile strength in the longitudinal direction that is the main requirement of a wall-tie. In one embodiment, the body portion comprises a core of FRP having randomly orientated fibres and an outer layer of FRP having longitudinally aligned fibres and, optionally further layers therebetween or thereon. In another embodiment, the body portion comprises a core of FRP having longitudinally aligned polymer and at least one layer of FRP thereon which may comprise a layer of randomly orientated fibre-reinforced polymer, a layer of FRP having lateral fibres and a layer of FRP having longitudinal fibres. An outer layer may be provided by providing a mat of randomly orientated fibres. A fibre-reinforced polymer may have lateral fibres or laterally orientated fibres provided by a helical wind of fibre rovings about a longitudinally aligned core. There may be multiple layers comprising successive layers of longitudinal and random and/or lateral fibres. Lateral and randomly orientated fibres provide additional strength in other dimensions (other than the key longitudinal direction). In a preferred embodiment of the present invention, the body portion comprises at least one layer (e.g. the core) of longitudinally aligned fibre-reinforced polymer and radially outward therefrom at least one layer of laterally aligned fibre-reinforced polymer, which preferably a helically wound layer of fibre rovings. A helical wind of fibres about a longitudinally aligned fibre-reinforced polymer provides significant longitudinal tensile strength combined with further enhanced fire-resistance and other dimensional strength (e.g. torsional and shear strength).

In these multi-layer embodiments, the fibre may be the same or different in each or any layer, but is preferably basalt fibre.

By longitudinal fibres, it is meant fibres which are tending to be orientated in the direction of pultrusion or co-axial with the mandrel. Any fibre which is at an angle of less than 45 degrees to the direction of pultrusion is a longitudinal fibre, although preferably they are less than 15 degrees and more preferably less than 10 degrees deviated from the direction of pultrusion and most preferably substantially in the direction of pultrusion, i.e. most preferably they are substantially axial in orientation.

By laterally orientated fibres, it is meant that the fibres are offset from the median or the direction of pultrusion (e.g. the axis of a mandrel) generally at an angle of 45 degrees or more. More preferably, the laterally orientated fibres are offset from the axial direction by at least 60 degrees and still more preferably at least 75 degrees. In preferred embodiments of the invention, the lateral orientated fibres are arranged as wound fibres having an angle offset from the transverse direction by up to 15 degrees, optionally up to 30 degrees and possibly up to 45 degrees. More preferably, the wound fibres are offset from the transverse by up to and including 10 degrees and most preferably at least fibre rovings on the relatively wide side of the profile are orientated in the range 1 to 5 degrees from the transverse direction.

The fibre-reinforced body portion of an embodiment of the invention may be manufactured by any suitable means, such as pultrusion, injection moulding, resin transfer moulding, vacuum bag and press moulding, press moulding, compression moulding, filament winding, but preferably, the body portion is manufactured by pultrusion and/or filament winding.

Any suitable resin may be used. Optionally the resins may be thermosetting or thermoplastic, but thermosetting resins are strongly preferred. Actinic-radiation curing resins may alternatively be used.

Preferably the resin is selected from one or more of epoxy resins, vinyl ester resins, polyester resins, polyurethane resins or phenolic resins. More preferably, especially for use in pultrusion manufacture, the resin is vinyl ester, epoxy or polyester resin, more preferably vinyl ester or epoxy and still more preferably epoxy resin.

Certain additives may optionally be included in the resin formulation to enhance performance, such as Intumescent^{™} to improve fire resistance (which is incorporated by dissolving or dispersing in the resin) and/or nano clay particles (to enhance fire resistance and increase strength).

The fibre-reinforced polymer used comprising the body portion, which is preferably a pultruded profile, preferably has a fibre content of greater than or equal to 50% by weight of the fibre-reinforced polymer body portion, for example in the range 50 to 75%, more preferably in the range 55 to 70%, e.g. in the range 60 to 65%.

Optionally, the wall-tie may be provided with an outer coat for enhancing the fire resistance of the wall tie. The outer coat may be any suitable material, such as a Kevlar^{™} coating or other heat resistant material.

Preferably it is not coated in sand or other abrasive additive.

The invention will now be described in more detail, without limitation, with reference to the accompanying Figures.

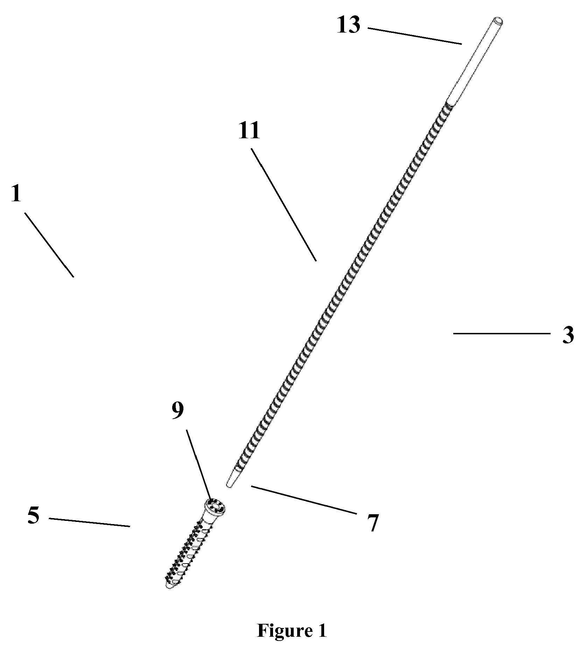

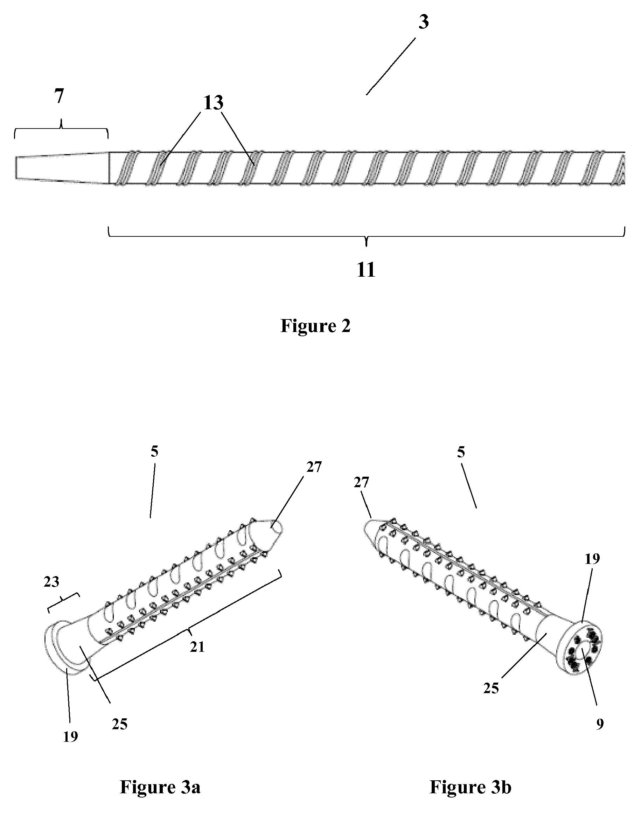

In Figure 1 a wall-tie and anchor plug system 1 according to one embodiment of the present invention is illustrated in perspective view. The system comprises a hammer-in wall-tie 3 and anchor plug 5 configure to receive the wall-tie 3. The system illustrated is for a 5 mm nominal diameter wall-tie 3 (although corresponding systems for other diameters can be provided, typically 6 mm and 7 mm according to the length required). The wall-tie 3, which is preferably a fibre-reinforced polymer rod (e.g. of basalt fibre) which provides low-thermal conductivity properties, has a tip-portion 7 for inserting into an opening 9 of the anchor plug 5 which is fitted into a drill hole in a wall or skin (not shown) to which the wall-tie is to be anchored. The wall-tie 3 has a body portion 11 having a smooth surface but having disposed thereon a helical thread 13 (see Figure 2) to improve the retention of the wall-tie 3 within the anchor plug 5. In Figure 2, the wall-tie 3 is shown in greater detail in side view, illustrating the tip portion 7 having a taper angle of 15°, absent surface features and a length of approximately 15 mm. The body portion 11 is also illustrated in more detail showing the helical thread 13, formed by a helical winding of two adjacent threads about the body portion 11 and set in a resin. The body portion 11 is otherwise smooth so as not to 'lock' to rapidly in the anchor plug 5. The helical thread 13 typically protrudes 0.1 to 0.25 mm from the surface of the body portion 11, which otherwise has a diameter of 5 mm (or 6 mm or 7 mm in other embodiments). The helical thread 13 may have any suitable wind angle. Preferably, the helix angle of the helical thread 13 is up to 45° and preferably, as in this case, from 15 to 30°. The opposing end 15 ofwall-tie 3 (see Figure 1) is absent the helical thread 13, but has a coating of sand formed thereon to improve locking in mortar in a brick course or similar of a second skin (not shown). Other opposing ends may be adapted for fixing to other second skins.

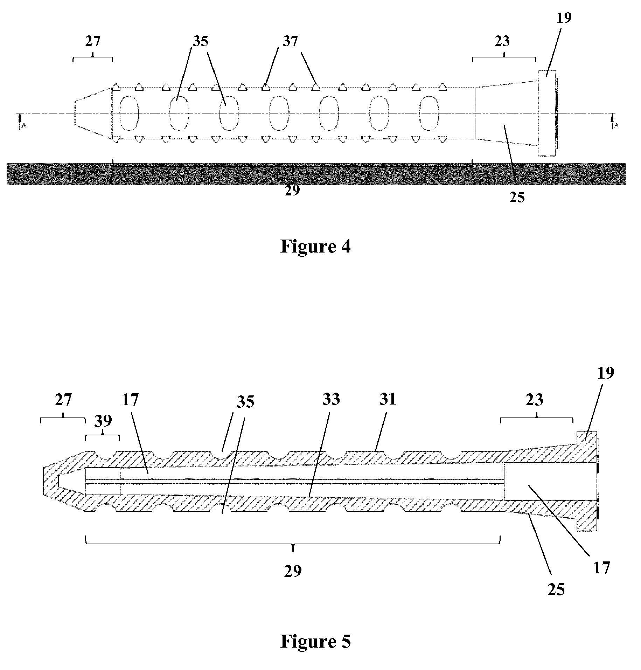

In Figures 3a and 3b an anchor plug 5 is illustrated in respective distal and proximal perspective views. The anchor plug 5 has an opening 9 to an internal cavity 17 of longitudinal extent (see Figure 5) for receiving a corresponding wall-tie 3. The opening 9 is flanked by a flanged collar 19 of 2.5 mm depth and 2.5 mm lateral extent (in each direction) from the plug body 21 (so the total diameter at the collar 19 is typically in the region of 13 to 15 mm). This flanged collar 19 provides a particular advantage for the system in that during installation and in compression, the flanged collar 19 provides resistance to the anchor plug 5 and installed wall-tie 3 from sinking further into the drill-hole (not shown) formed in the skin to which the wall-tie is anchored.

The plug body 21 has a proximal portion 23 adjacent the flanged collar 19, the external surface 25 of which is tapered inward toward the distal end 27. The proximal portion 23 has a length of 9-10 mm and an external taper angle of 15°. This reduces the external diameter from 9.8 mm adjacent the flanged collar 19 to 7.8 mm. The internal surface of the proximal portion 23 defines a constant diameter of 5 mm (see Figure 5). The main body portion 29 defines the major part of the anchor plug 5. The main body portion 29 (see Figure 4) has a body portion external surface 31 and a body portion internal surface 33 (see Figure 5) which together define a constant external diameter and a tapering internal diameter. The body portion external surface 31 which has a diameter of 7.8 mm has surface features formed thereon in the form of oval notches 35 cut into the surface and teeth 37 projecting out. Together, these surface features provide a grip for the anchor plug 5 when embedded in a drill hole of suitable size and when a corresponding wall-tie 3 is installed. Notches 35 in this embodiment are provided every 7.5 mm on each side along the length of the plug 5 and two rows of teeth 37 are disposed on each side along the length of the plug 5 at double that frequency. Thus, the plug 5 is provided with a good grip within a drill hole that resists movement in both tension and compression to support the system's performance of at least 1 kN in tension or compression. A distal end 27 tapers internally and externally from the body portion to provide a closed end, at a taper angle of approximately 30° for 5-6 mm.

Figure 5 shows a cross-sectional view of the anchor plug 5 across the line A-A of Figure 4 to illustrate the internal cavity 17 of the anchor plug 5. Body portion 29 comprises a body portion tapered internal surface 33 which extends for the majority of the internal longitudinal extent of the cavity 17 and in this case 50 mm where it reduces in diameter from 5 mm to 3.5 mm (although for the plugs adapted for larger diameter wall-ties, the proportional reduction is less) in a constant taper toward the distal end. Optionally, a short (up to 5 mm) distal portion 39 is provided in the body portion which has an internal distal surface 41 of constant diameter, before the internal surface finally tapers at the distal end 27.

By providing a shallow taper along a long internal cavity 17 of an anchor plug 5, with external surface features and a flanged collar 19, the internal dimensions of which are closely matched to a wall-tie 3 (in this case of 5 mm diameter) with a helical thread 13 providing surface features thereon, a very reliable and consistent embedment can be achieved with consistent and significant resistance to loads under compression and tension. The present invention enables loads in compression and tension of at least 1 kN. Thus, high performance wall-tie systems can be specified which have a consistent embedment thus allowing requirements for consistent laying in corresponding brick and mortar courses for the second skin to be achieved. The flanged collar 19 is believed to be particularly effective in enhancing the resistance to load under compression, whilst the shallow, but long internal surface taper of the plug closely matched with a wall-tie 3 diameter enables consistent embedment and, with the surface features of the wall-tie, excellent resistance to load in tension. The tapered external surface of the proximal portion 23 assists in providing a robust and solid fit for the anchor plug in the drill hole, which further enhances the consistency of the resistance to load in tension and compression.

The anchor plug is preferably formed of a polypropylene or polyamide by injection moulding.

It is noted that all plug diameters may be increased by up to 0.2 or 0.3 mm to accommodate a 5 mm diameter wall-tie 3 depending on the rigidity of the material used in manufacturing of the anchor plug 3 and/or the extent of protrusion of the helical thread 13.

### EXAMPLES

### Example 1

Hammer in wall-ties and corresponding anchor plugs according to three embodiments of the present invention were tested for installation effectiveness, and load resistance in tension and in compression in various support materials. The three embodiments tested are described as systems A, B and C below.

In each case, a basalt fibre in epoxy resin wall-tie is used. The wall-tie is a basalt fibre of 13 µm diameter with a transverse wrap and is pultruded in epoxy resin through a pultrusion die of 5 mm, 6mm or 7 mm to produce a cured basalt fibre circular section elongate rod. A volumetric ratio of basalt fibre to resin in the range 60:40 to 65:35 was used.

A tapered tip is formed on each wall-tie.

In surface threaded versions (threaded wall-tie), a pair of cotton threads are wound in a 20 degree helix and set in epoxy resin about the body portion of the wall-tie to provide a protrusion of 0.25 mm.

The plug-engaging portions are provided with over-gloss surface (i.e. no sand coating), unless otherwise stated.

In each case, a moulded polyamide anchor plug is used having a length of 700 mm, a tapered, closed distal end, a flanged collar and externally tapered proximal portion. Between the proximal portion and the distal end, a main body portion is provided with oval notches (of 3mm short diameter) and projecting teeth every 7.5 mm and 3.75 mm respectively. The internal cavity comprises a proximal portion of constant diameter, an extended tapered portion and optionally a distal portion of constant diameter.

### System A:

Wall tie: A 5mm (excluding surface features) threaded wall-tie defined above is used.

Anchor plug: A plug having: 5 mm internal diameter opening and constant internal diameter proximal portion of 12 mm length then main body portion tapering over 50 mm to 3.5 mm internal diameter, a 4.5mm distal portion of constant diameter and 3.5 mm tapered distal end; a 13 mm diameter head (including 2 5 mm depth and 1.6 mm extending flange collar), 9.5 mm length proximal portion and 7.8 mm external diameter plug body.

### System B:

Wall tie: A 6 mm (excluding surface features) threaded wall-tie defined above is used.

Anchor plug: A plug having: 6 mm internal diameter opening and constant internal diameter proximal portion of 12 mm length then main body portion tapering over 54.5 mm to 5 mm internal diameter and a 2.5 mm tapered distal end; a 15 mm diameter head (including 2.5 mm depth and 1.6 mm extending flange collar), 9.5 mm length proximal portion and 9.8 mm external diameter plug body.

### System C:

Wall tie: A 7 mm (excluding surface features) threaded wall-tie defined above is used.

Anchor plug: A plug having: 7 mm internal diameter opening and constant internal diameter proximal portion of 12 mm length then main body portion tapering over 27.25 mm to 5.5 mm internal diameter, a 27.25 mm distal portion of constant diameter and a 3.5 mm tapered distal end; a 15 mm diameter head (including 2.5 mm depth and 1.6 mm extending flange collar), 9.5 mm length proximal portion and 9.8 mm external diameter plug body.

The following support materials were tested: C12/15 concrete, C25/30 concrete, clay bricks and calcium silicate. Drill holes corresponding to the three sizes of anchor plug were formed in the support materials. The consistency of embedment was recorded as the extent of the wall-tie beyond the fully-inserted distance (i.e. fully extended = 0 mm). The resistance to load in tension and compression was also tested.

Results of the tests under example 1 are set out in the following table:

| **Support material** | **System** | **Embedment range (distance out of plug)/mm** | **No of hits required** | **Resistance to load in tension** | **Resistance to load in compression** |
|---|---|---|---|---|---|
| C12/15 | A | 5-15 | 10-15 | > 1 kN | > 1 kN |
| C12/15 | A' | 0 | 5 | > 1 kN | > 1 kN |
| C12/15 | B | 0-10 | 10-15 | > 1 kN | > 1 kN |
| C12/15 | B' | 0 | 5 | > 1 kN | > 1 kN |
| C12/15 | C | 20-25 | 10-15 | > 1 kN | > 1 kN |
| C12/15 | C' | 5 | 8 | > 1 kN | > 1 kN |
| C25/30 | A | 15 | 10-15 | > 1 kN | > 1 kN |
| C25/30 | A' | 0 | 5 | > 1 kN | > 1 kN |
| C25/30 | B | 0-10 | 10-15 | > 1 kN | > 1 kN |
| C25/30 | B' | 0 | 5 | > 1 kN | > 1 kN |
| C25/30 | C | 15-25 | 10-15 | > 1 kN | > 1 kN |
| C25/30 | C' | 5 | 8 | > 1 kN | > 1 kN |
| Clay bricks | A | 0-10 | 10-15 | > 1 kN | > 1 kN |
| Clay bricks | A' | 0 | 5 | > 1 kN | > 1 kN |
| Clay bricks | B | 0-10 | 10-15 | > 1 kN | > 1 kN |
| Clay bricks | B' | 0 | 5 | > 1 kN | > 1 kN |
| Clay bricks | C | 10-25 | 10-15 | > 1 kN | > 1 kN |
| Clay bricks | C' | 5 | 8 | > 1 kN | > 1 kN |
| Calcium Silicate | A | 10-20 | 10-15 | > 1 kN | > 1 kN |
| Calcium Silicate | A' | 0 | 5 | > 1 kN | > 1 kN |
| Calcium Silicate | B | 0-10 | 10-15 | > 1 kN | > 1 kN |
| Calcium Silicate | B' | 0 | 5 | > 1 kN | > 1 kN |
| Calcium Silicate | C | 15-30 | 10-15 | > 1 kN | > 1 kN |
| Calcium Silicate | C' | 5 | 8 | > 1 kN | > 1 kN |

In the above table, systems A', B' and C' are identical to systems A, B and C except that internal diameters of the anchor plugs are increased by 0.3 mm.

It is notable that all systems in all materials tested exceeded 1 kN in compression and in tension.

Increasing the internal diameters by up to 3 mm improved the consistency of embedment and the ease of embedment (5 to 8 hits) compared with systems A, B and C.

### Example 2

The test in Example 1 in calcium silicate blocks was repeated with variations to the wall-tie and/or the anchor plug. The following results were determined:

| **System** | **Wall**-**tie** | **Anchor plug** | **Load resistance in tension** | **Load resistance in compression** | **Embedment range** |
|---|---|---|---|---|---|
| 2-1 | 6 mm threaded wall-tie from System B | Fischer expansion plug SX 6x50^{a} | 0.6-0.7 kN^{b} | Very variable - no collar to control embedment | Variable |
| 2-2 | 5 mm unthreaded smooth wall-tie | Anchor plug from system A | Very poor | Poor | 0 |
| 2-3 | 5 mm unthreaded sand-coated wall-tie | Anchor plug from system A | High | Breaks tie | High (outside measurable range) |

| | | | | | |
|---|---|---|---|---|---|
| ^{a} this is a 4-way expansion nylon plug of 50 mm length (45 mm internal length) and 6 mm internal diameter ^{b} the results were very variable - ranging from 0.6-0.7 typically and occasionally to above 1 kN. | | | | | |

It is noted in particular that the commercial anchor plug was considerably shorter and without a retention flanged collar. This produced very variable results in embedment and load resistance in both tension and compression. This reduces the performance reliability of the wall-tie and plug system.

Having a smooth wall-tie as defined in Example 1 but without threads or surface features resulted in consistently good embedment but very poor load resistance in tension. In compression, whilst the flange collar prevented the plug from going in the hole, it was possible for the tie to burst through the end and break the plug since there was little resistance to its lateral movement.

Having a sand-coated (or other rough or resistant) surface simply locked the tie into the plug which gave poor or inconsistent embedment, was insufficiently imbedded for compression test and generally resulted in buckling of the plug, although was generally good in tension.

It is determined that the features that secure benefit and improvement to the wall-ties, the anchor plugs and moreover the system, include longitudinally extended internal cavity (of at least 50 mm, more preferably at least 60 mm and ideally 65 to 75 mm), a significant proportion of which includes a shallow taper (1 in 25 to 1 in 200, preferably in lin 50 to 1 in 125) within the plug, a flanged collar at the opening to the collar of the plug, and surface features (such as a helical thread) on the corresponding wall-tie and most preferably a combination of some or all of these features.

The invention has been described with reference to a preferred embodiment. However, it will be appreciated that variations and modifications can be effected by a person of ordinary skill in the art without departing from the scope of the invention.

## Claims

1. A wall-tie and cooperating anchor plug system comprising:
a wall-tie configured for fitting to a cooperating anchor plug, the wall-tie comprising an elongate rod having a plug cooperating portion, the wall-tie having a tapered tip portion and a body portion, which body portion is provided with surface features; and
an anchor plug for fitting into a hole in a wall or skin, the plug comprising an elongate element having an outer surface and an inner surface defining a cavity for receiving the wall tie, which cavity has an opening at a proximal end through which a cooperating wall tie may pass into the cavity, a longitudinal extent and having an opposing distal end, the plug being further defined by one or more of the following features:
a) a flanged portion at the proximal end
b) a closed distal end
c) surface features provided on the outer surface
d) a tapered internal body portion comprising a tapered internal surface along at least a portion of the longitudinal extent of the plug cavity;
e) a proximal portion extending from the proximal end along at least a portion of the length of the plug having a constant diameter inner surface and an inwardly tapering outer surface
f) a distal end having outer and inner surfaces that taper inwardly toward the distal end; and, optionally
g) a distal portion extending from the distal end of feature f) above along at least a portion of the length of the plug having a constant diameter inner surface.

2. A system as claimed in claim 1, wherein the plug comprises a tapered internal body portion comprising a tapered internal surface along at least a portion of the longitudinal extent of the plug cavity.

3. A system as claimed in claim 2, wherein the tapered internal body portion extends to at least 50% of the longitudinal extent of the plug cavity.

4. A system as claimed in any one of claims 2 to 3, wherein the tapered internal body portion has a taper represented by a gradient in the range from 1 in 25 to 1 in 500.

5. A system as claimed in any one of claims 2 to 4, wherein the tapered internal body portion extends to a length of from 25 to 60 mm, preferably 45 to 55 mm.

6. A system as claimed in any one of claims 2 to 4, wherein the tapered internal body portion has a taper that reduces the diameter of the cavity by an amount in the range from 0.25 mm to 2 mm.

7. A system as claimed in any one of the preceding claims wherein the plug has a length in the range from 50 to 100 mm, preferably 70 mm.

8. A system as claimed in any one of the preceding claims, wherein the plug comprises a flanged portion at the proximal end, wherein the flanged portion comprises a laterally extending collar about the rim of the opening.

9. A system as claimed in any one of the preceding claims, wherein the plug comprises a proximal portion extending from the proximal end along at least a portion of the length of the plug having a constant diameter inner surface and an inwardly tapering outer surface.

10. A system as claimed in claim 9, wherein the proximal portion extends for 5 to 20 mm and wherein the inwardly tapering outer surface has a taper angle of from 10 to 20 degrees.

11. A system as claimed in any one of the preceding claims, wherein the plug comprises surface features on the outer surface thereof, wherein the surface features are notches in the outer surface of the plug and/or teeth protruding from the outer surface of the plug.

12. A system as claimed in any one of the preceding claims, wherein the wall-tie comprises surface features comprising protrusions, undulations or surface irregularities extending from the body portion of the wall-tie.

13. A system as claimed in any one of the preceding claims, wherein the wall-tie is formed from a low thermal conductivity fibre-reinforced polymer.

14. A wall-tie for use in a system as defined in any one of claims 1 to 13, the wall tie comprising an elongate rod having a plug cooperating portion, the wall-tie plug cooperating portion having a tapered tip portion and a body portion, which body portion is provided with surface features.

15. An anchor plug for use in a system as defined in any one of claims 1 to 13, the anchor plug configured for fitting into a hole in a wall or skin, the anchor plug comprising an elongate element having an outer surface and an inner surface defining a cavity for receiving the wall tie, which cavity has an opening at a proximal end through which a cooperating wall tie may pass into the cavity, a longitudinal extent and having an opposing distal end, the plug being further defined by one or more of the following features:
a) a flanged portion at the proximal end
b) a closed distal end
c) surface features provided on the outer surface
d) a tapered internal body portion comprising a tapered internal surface along at least a portion of the longitudinal extent of the plug cavity;
e) a proximal portion extending from the proximal end along at least a portion of the length of the plug having a constant diameter inner surface and an inwardly tapering outer surface
f) a distal end having outer and inner surfaces that taper inwardly toward the distal end; and, optionally
g) a distal portion extending from the distal end of feature f) above along at least a portion of the length of the plug having a constant diameter inner surface.
